# EUROPÄISCHE PATENTANMELDUNG

(11) **EP 1 881 547 A1**
(43) Veröffentlichungstag der Anmeldung: **23.01.2008**
(21) Anmeldenummer: 07012873.1
(22) Anmeldetag: 30.06.2007
(51) Int. Cl.: H01M 4/86, H01M 4/88, H01M 8/10

(54) **Strukturierte Elektrode für den Einsatz in einer Brennstoffzelle**

(30) Priorität: 18.07.2006 DE 102006033130
(71) Anmelder: Forschungszentrum Jülich GmbH, 52425 Jülich (DE)
(72) Erfinder: Schonert, Morten, 31171 Nordstemmen (DE)

(57) **Zusammenfassung**

Die Erfindung betrifft eine Elektrode, insbesondere eine Gasdiffusionselektrode für den Einsatz in einer mit flüssigen Betriebsmitteln betriebenen Brennstoffzelle. Die Elektrode weist dabei senkrecht zur Elektrodenoberfläche verlaufende, makroskopisch, durchgehende Öffnungen von wenigstens 0,5 mm² Querschnittsfläche auf, die geeignet sind, ein Betriebsmittel durch die Elektrode bis an einen daran angrenzenden Elektrolyten zu- und/oder abzuführen.

Es wurde gefunden, dass der Vorteil des schnelleren Abtransportes der gasförmigen Reaktionsprodukte von der Elektrode weg durch die makroskopischen Öffnungen, den Nachteil einer verminderten katalytischen Belegung in der Dreiphasenzone durch das Vorhandensein von Öffnungen deutlich überwiegt.

## Beschreibung

Die Erfindung betrifft eine Elektrode für den Einsatz in einer Brennstoffzelle, insbesondere in einer mit flüssigen Betriebsmitteln betriebenen Brennstoffzelle. Bei der Elektrode handelt es sich insbesondere um eine Gasdiffusionselektrode (GDE).

### Stand der Technik

Eine Brennstoffzelle umfasst regelmäßig eine Kathode, einen Elektrolyten sowie eine Anode. In einen an die Kathode angrenzenden Kanal oder Raum wird ein Oxidationsmittel (z. B. Luft) und in einen an die Anode angrenzenden Kanal oder Raum wird Brennstoff (z. B. Wasserstoff) zugeführt.

Die Betriebsmittel gelangen zu den Elektroden und verbrauchen sich während der dort stattfindenden elektrochemischen Reaktion. Anschließend treten die dann zumindest teilweise verbrauchten, mit anderen Worten abgereicherten Betriebsmittel wieder aus und werden aus der Brennstoffzelle herausgeleitet.

Bei den bekannten Polymer-Elektrolyt-Membran (PEM) - Brennstoffzellen bilden sich in Anwesenheit des Brennstoffs mittels eines Katalysators Protonen. Die Protonen passieren die Elektrolytmembran und verbinden sich auf der Kathodenseite mit dem vom Oxidationsmittel stammenden Sauerstoff zu Wasser. An der Anode werden Elektronen freigesetzt und an der Kathode verbraucht und so die elektrische Energie erzeugt. Alternativ gibt es auch anionische Membranen, bei denen anstelle von Protonen entsprechend Hydroxid-Ionen durch die Membran wandern.

Zur Erzielung guter Wirkungsgrade müssen die Betriebsmittel räumlich gleichmäßig in einer Brennstoffzelle verteilt werden. Durchströmen die Betriebsmittel die Brennstoffzelle, so sind Druckverluste zu vermeiden bzw. gering zu halten. Druckverluste haben in der Regel Leistungsverluste zur Folge.

In den Elektrodenräumen einer PEM-Brennstoffzelle liegen in der Regel Gemische aus Gasen und/oder Flüssigkeiten vor. Es kann sich um mit Inertgasen verdünnte Brenngase handeln. Durch Reformierung oder Oxidation eines Brennstoffs, wie beispielsweise einem Methanol-Wasser-Gemisch, treten im betreffenden anodischen Elektrodenraum regelmäßig weitere Gase, wie z. B. CO₂ auf. Der Kathode wird regelmäßig ein Oxidationsmittel, z. B. Luft und damit auch das Inertgas Stickstoff zugeführt. Die an den jeweiligen Elektroden befindlichen Gase oder Flüssigkeiten sollten homogen durchmischt vorliegen, um zu guten Leistungen zu gelangen.

Strömen Betriebsmittel parallel zu den Elektroden über längere Bereiche hinweg, so verbrauchen sie sich durch die stattfindende elektrochemische Reaktion zunehmend. Entsprechend unterscheiden sich die ablaufenden Reaktionen ortsabhängig in quantitativer Hinsicht. Dies führt unter anderem zu thermischen Gradienten innerhalb der Brennstoffzelle, die regelmäßig zu vermeiden sind, da sich diese schädigend auswirken können.

Gemäß der DE 198 08 331 werden zur Lösung der vorgenannten Probleme eine Mehrzahl an Zuführungskanälen und hieran angrenzende Abführungskanäle vorgesehen. Die Zuführungs- und Abführungskanäle weisen dabei Löcher auf, die an die Elektrode der Brennstoffzelle angrenzen. Die Betriebsmittel durchströmen die Löcher und gelangen so senkrecht zur Elektrode sowie zur Grenzfläche zwischen Elektrolyt und Elektrode. In gleicher Weise strömen sie senkrecht wieder ab. Es sind ferner unterschiedlich große Löcher vorgesehen, um so eine Gleichverteilung der Gase entlang der Elektrodenfläche zu erzielen.

Nachteilig ist der beschriebene Aufbau aufgrund der Vielzahl der Kanäle relativ aufwändig und die erwünschten Durchmischungen sind relativ gering.

Aus DE 198 53 911 wird eine Brennstoffzelle vorgeschlagen, bei der eine Elektrode von einem an die Elektrodenoberflächen angrenzenden Raum oder Kanal durch eine gelochte Platte getrennt ist. Über den angrenzenden Raum oder Kanal wird das entsprechende Betriebsmittel zu- und abgeführt. Im Unterschied zum eingangs genannten Stand der Technik mit den getrennten Kanälen ist hier die Gaszuführung zugleich die Gasableitung. In Strömungsrichtung des Gases nehmen die Dichte und/oder der Durchmesser der Löcher insbesondere zu. Es treten im Vergleich zu einer Brennstoffzelle mit getrennten Zu- und Abführungskanälen große Durchmischungen (Verwirbelungen) auf. Temperaturgradienten werden so vorteilhaft vermieden.

Nach dem Stand der Technik werden in der Regel lateral uniforme Elektrodenschichten für die Anoden verwendet, wobei sowohl die Katalysator- als auch die Gasdiffusionsschicht uniform ausgebildet sind.

### Aufgabe und Lösung der Erfindung

Aufgabe der Erfindung ist die Schaffung einer Brennstoffzelle mit einer verbesserten Führung der Betriebsmittel, wobei insbesondere der Abtransport des auf der Anodenseite entstehenden gasförmigen CO₂ verbessert und auch der Stofftransport bis an den Elektrolyten unterstützt werden soll.

Die Aufgabe wird gelöst durch eine Gasdiffusionselektrode mit der Gesamtheit an Merkmalen gemäß Hauptanspruch.

Ferner wird die Aufgabe gelöst durch die Verwendung der erfindungsgemäßen Gasdiffusionselektrode in einer Brennstoffzelle gemäß Nebenanspruch.

Weiterhin wird die Aufgabe gelöst durch ein Herstellungsverfahren für die Gasdiffusionselektrode gemäß weiterem Nebenanspruch.

Vorteilhafte Ausgestaltungen der Gasdiffusionselektrode, der Verwendung sowie des Herstellungsverfahrens finden sich in den jeweils darauf rückbezogenen Ansprüchen.

### Gegenstand der Erfindung

Anspruchsgemäß wird die Aufgabe durch eine besonders strukturierte Elektrode gelöst. Bei der Elektrode handelt es sich regelmäßig um eine Gasdiffusionselektrode (GDE).

Eine Elektrode muss im Inneren von poröser Struktur sein, um einen Gas- und Flüssigkeitstransport zu gewährleisten. Die poröse Struktur dient dem Stofftransport zu und von der Dreiphasenzone weg. Die Dreiphasenzone enthält regelmäßig den Katalysator, der gleichzeitig als Stromabnehmer dient. Neben der katalytischen Aktivität der Elektrode ist auch ein elektrischer und ionischer Kontakt für einen erfolgreichen Betrieb der Brennstoffzelle erforderlich.

Im Rahmen der Erfindung wurde nun gefunden, dass zur homogenen Verteilung des Betriebsmittels neben der verbesserten Struktur des Flowfields auch eine Strukturierung der Elektrode selbst beitragen kann, insbesondere zur Verbesserung und Unterstützung des Abtransportes des bei der elektrochemischen Reaktion in der Dreiphasenzone entstehenden Kohlendioxids.

Für die erfindungsgemäße Strukturierung der Elektrode ist insbesondere vorgesehen, die bislang lateral uniforme mikroporöse Schicht der Elektrode mit durchgehenden makroskopischen Öffnungen zu versehen. Als ein kennzeichnendes Merkmal der Strukturierung kann dabei das Verhältnis von makroskopisch offener zu makroskopisch geschlossener Elektrodenoberfläche angesehen werden. Eine vorteilhafte Wirkung der erfindungsgemäßen Strukturierung ist insbesondere zu beobachten, wenn die makroskopisch offene Elektrodenfläche 1 bis 20 %, insbesondere 3 bis 10 % der gesamten Elektrodenfläche ausmacht.

Die Geometrie der einzelnen Öffnungen kann dabei unterschiedliche Einflüsse haben. Sie ist jedoch nicht wesentlich und kann u. U. vom jeweiligen Herstellungsverfahren abhängen. Vorteilhafte Ausführungsformen sind aber z. B. runde oder ovale Öffnungen oder aber auch schlitzförmige Öffnungen. Zur Abgrenzung gegenüber der üblichen Porosität einer Elektrode weisen die hier offenbarten makroskopischen Öffnungen einzelne Öffnungen mit einer Mindestquerschnittsfläche von wenigstens 0,5 mm² auf. Die Querschnittsfläche der Einzelöffnungen hängt dabei insbesondere auch von der gesamten Elektrodenfläche ab. Besonders vorteilhafte Öffnungen für eine Gasdiffusionselektrode mit einer Gesamtfläche im Bereich von einigen cm² weisen beispielsweise Querschnittsflächen im Bereich von 0,7 bis 4 mm² auf. Für eine Elektrode mit einer Gesamtfläche im Bereich von einigen hundert cm² können sich aber auch größere Öffnungen mit bis zu 0,6 cm² als geeignet herausstellen.

Es wurde im Rahmen der Erfindung gefunden, dass der Vorteil des schnelleren Abtransportes der gasförmigen Reaktionsprodukte von der Dreiphasengrenze weg durch die makroskopischen Öffnungen der Elektrode den Nachteil einer verminderten katalytischen Belegung in der Dreiphasenzone durch das Vorhandensein von Öffnungen deutlich überwiegt.

Als geeignete Brennstoffzellen, bei denen die erfindungsgemäße Gasdiffusionselektrode vorteilhaft eingesetzt werden kann, sind insbesondere zu nennen: Direkt-Methanol-, Direkt-Ethanol-, Direkt-Dimethylester und Direkt-Ameisesäure-Brennstoffzellen. Allen vorgenannten Brennstoffzellen ist gemeinsam, dass sie mit einem flüssigen Betriebsmittel betrieben werden, und dass bei der elektrochemischen Umsetzung auf der Anodenseite ein Gas freigesetzt wird.

Als Durchtrittsfläche im Sinne dieser Erfindung wird im Folgenden die Fläche der Elektrode benannt, durch die ein Betriebsmittel durch die makroskopischen Öffnungen hindurch bis an den Elektrolyten strömen kann. Sie stellt also die Summe der Querschnittsflächen aller makroskopischen Öffnungen in einem bestimmten Bereich dar.

In einer vorteilhaften Ausgestaltung der Erfindung wird die Durchtrittsfläche der Strömungsdynamik der Brennstoffzelle angepasst. Das kann beispielsweise dadurch realisiert werden, dass die Durchtrittsfläche im Bereich des Brennstoffeinlasses geringer ausgestaltet ist, als die Durchtrittsfläche im Bereich des Brennstoffauslasses. Dies kann dann nützlich sein, wenn im Verlauf des Übertrömens der Elektrode, die Konzentration des Brennstoffs auf Grund der bis dahin erfolgten elektrochemischen Umsetzung in Strömungsrichtung abnimmt. Um eine gleich bleibende Umsatzrate der Elektrode pro Flächeneinheit zu ermöglichen, kann hier der Kontakt zwischen nunmehr abgereichertem Brennstoff und Dreiphasenzone durch jeweils größere Öffnungen und/oder steigende Anzahl an Öffnungen/pro Elektrodenfläche unterstützt werden.

In einer besonderen Ausgestaltung nehmen bei einer Gleichverteilung der Öffnungen über die gesamte Elektrodenfläche die Querschnittsflächen der einzelnen Öffnungen in Strömungsrichtung um wenigstens 10 %, vorzugsweise um wenigstens 20 %, zu. Die Durchtrittsfläche der anspruchsgemäßen Elektrode im Eintrittsbereich des Betriebsmittels in die Brennstoffzelle ist also z. B. um wenigstens 10 % kleiner als im Vergleich zu den Verhältnissen im Austrittsbereich. Betrachtet werden dabei Durchtrittsflächen, die sich auf gleich große Teile der Platte im Eingangs- und Austrittsbereich beziehen.

Derselbe Effekt kann erzielt werden, wenn anstelle der Variation der Querschnittsflächen der einzelnen Öffnungen die Anzahl der Öffnungen bei z. B. gleich bleibender Querschnittsfläche variiert wird. Selbstverständlich ist auch eine beliebige Kombinationen dieser beiden vorgestellten Variationen denkbar.

Durch Vorsehen einer in Strömungsrichtung zunehmenden Durchtrittsfläche wird folgender Effekt erreicht.
- 1.: Mit zunehmender Länge der Elektroden nimmt der Anteil an Inertgas zu, ebenso nimmt der Anteil an Brennstoff über die Länge ab. Hierdurch kommt es zu einer zunehmenden Behinderung der Versorgung der Elektrode mit Brennstoff. Dies wird durch eine zunehmende Durchtrittsfläche verbessert.
- 2.: Je nach der Ausgestaltung der Strömungsverteilerstruktur ist die Überströmung der Elektrode ungleichmäßig - vor allem in den Bereichen am Rand. Durch eine asymmetrische Ausgestaltung der Verteilung der Durchtrittsflächen kann diesem Effekt Rechnung getragen werden, in dem z. B. im Bereich der geringeren Überströmung eine geringere Anzahl von Durchtrittsöffnungen vorgesehen ist.

Es kann so insgesamt eine bessere Gleichverteilung der in der Elektrode ablaufenden elektrochemischen Reaktionen an der Grenzfläche Elektrode-Elektrolyt herbeigeführt werden.

Die erfindungsgemäße Elektrode kann auf unterschiedliche Weisen hergestellt werden. Die Stanztechnik ist für diese Art der Strukturierung sehr gut geeignet. Es lassen sich Strukturen (makroskopische Öffnungen) schon mit Dimensionen ab 1 mm auf einfache Art herstellen. Dies bietet sich insbesondere dann an, wenn die Elektrode selbst ebenfalls über einen Stanzprozess auf die entsprechende Zellgeometrie gebracht wird. In einem solchen Fall lassen sich beide Verfahrensschritte vorteilhaft zusammenfassen, in dem nur ein Stanzwerkzeug zur Herstellung der Elektrodengeometrie und der Strukturierung benötigt wird.

Der konstruktive Aufwand ist daher vergleichsweise gering.

### Spezieller Beschreibungsteil

Nachfolgend wird die Erfindung anhand von Figuren und Ausführungsbeispielen näher erläutert, ohne dass dadurch der Schutzbereich auf die hier offenbarten Beispiele eingeschränkt wird.

Es wird eine anodische Gasdiffusionselektrode mit einer anodischen Fläche von 17,6 cm² hergestellt. Die Herstellung geschieht wie folgt:

Ein geeigneter elektrisch leitender Support (Kohlenstoffgewebe) wird einseitig mit einer kohlenstoff- und teflonhaltigen Paste beschichtet (= Microlayer). Dies dient als Unterlage für die darauf folgende Katalysatorbeschichtung. Das Aufbringen der Katalysatorschicht geschieht durch Rakeln einer katalysatormaterialhaltigen Suspension.

Typische Schichtdicken sind für das Kohlenstoffgewebe 300 µm, für die Microlayer 60 bis 100 µm und für die Katalysatorschicht 40 bis 80 µm.

Als Anodenkatalysator wurde im diesem Beispiel ein Platin/Ruthenium-Katalysator verwendet. Platin- und Ruthenium-Partikel sind hier auf einem Kohlenstoffträger aufgebracht (60 Gew.-% Pt/Ru, 40 Gew.-% Kohlenstoff). Zusätzlich beinhaltet die Katalysatorschicht noch ein Ionen leitendes Polymer mit einem Gewichtsanteil von 30 %. Der Katalysator für die Kathode besteht aus 60 Gew.-% Platin, welches ebenfalls auf Kohlenstoff geträgert vorliegt.

Im Anschluss an die Herstellung der Elektroden werden 5 mal 5 (= 25) Öffnungen mit einer runden Querschnittsfläche und einem Durchmesser von jeweils 2 mm regelmäßig verteilt in die Elektrode (Anode) eingestanzt. Dies entspricht einer Reduzierung der aktiven Fläche von ca. 5 % und einer Reduzierung der Edelmetallbelegung von 0,1 mg/cm² Elektrodenfläche bei einer Edelmetallbelegung von 2,0 mg/cm² auf der Anode.

Die Elektroden wurden mittels Heißverpressen zur Membran-Elektroden-Einheit assembliert (0,5 kN/cm² für 3 Minuten bei 130 °C). Als Protonen leitende Membran wurde Nafion 115™ verwendet.

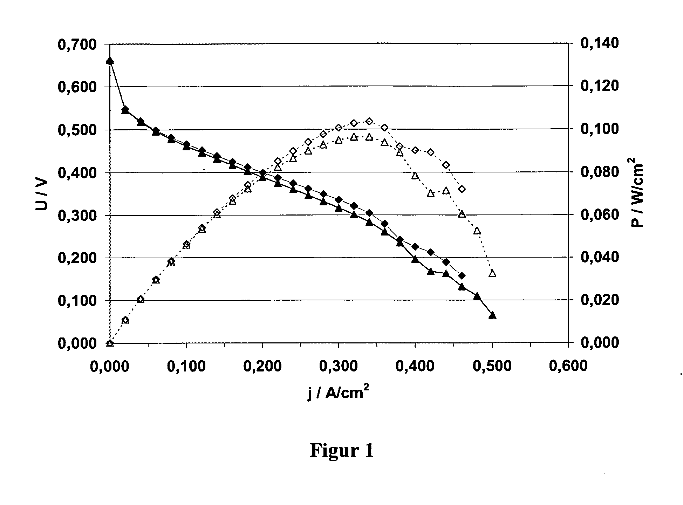

Die in Figur 1 dargestellte U-I-Kennlinie zeigt deutlich die Vorteile gegenüber einer herkömmlichen Elektrode ohne zusätzliche makroskopische Öffnungen.

### Die Messungen wurden unter folgenden Bedingungen durchgeführt:

Das Oxidationsmittel ist Luft. Die Brennstoffzelle wird mit einem 4-fachen Luftüberschuss bezogen auf eine Stromdichte von 500 mA/cm² betrieben (λ_{Luft} = 4@500mA/cm² = 4). Auf der Anode wird als Betriebsmittel eine 1molare wässrige Methanol-Lösung verwendet. Ebenfalls mit 4-fachen Überschuss an Methanol bezogen auf eine Stromdichte von 500mA/cm² (c(_{MeOH}) = 1 mol/l; λ_{MeOH} = 4@500mA/cm²). Der Betrieb der Brennstoffzelle erfolgt drucklos (Anode wie Kathode). Als Membran wird Nafion 115™ verwendet.

In dem Diagramm geben die ausgefüllten Symbole die gemessenen Zellspannungen und die unausgefüllten Symbole die gemessene Leistung für die entsprechende Stromdichte an. Die Dreieckssymbole gelten für die Messungen mit einer Membran-Elektrodeneinheit ohne makroskopische Öffnungen, die Rauten gelten für eine erfindungsgemäß strukturierte Elektrode innerhalb einer sonst gleichen Membran-Elektrodeneinheit.

Für alle eingestellten Stromdichten liegen die gemessenen Zellspannungen für die Brennstoffzelle mit einer erfindungemäß strukturierten Elektrode alle leicht oberhalb derer, die mit einer Brennstoffzelle mit einer herkömmlichen Elektrode nach dem Stand der Technik erzielt wurden.

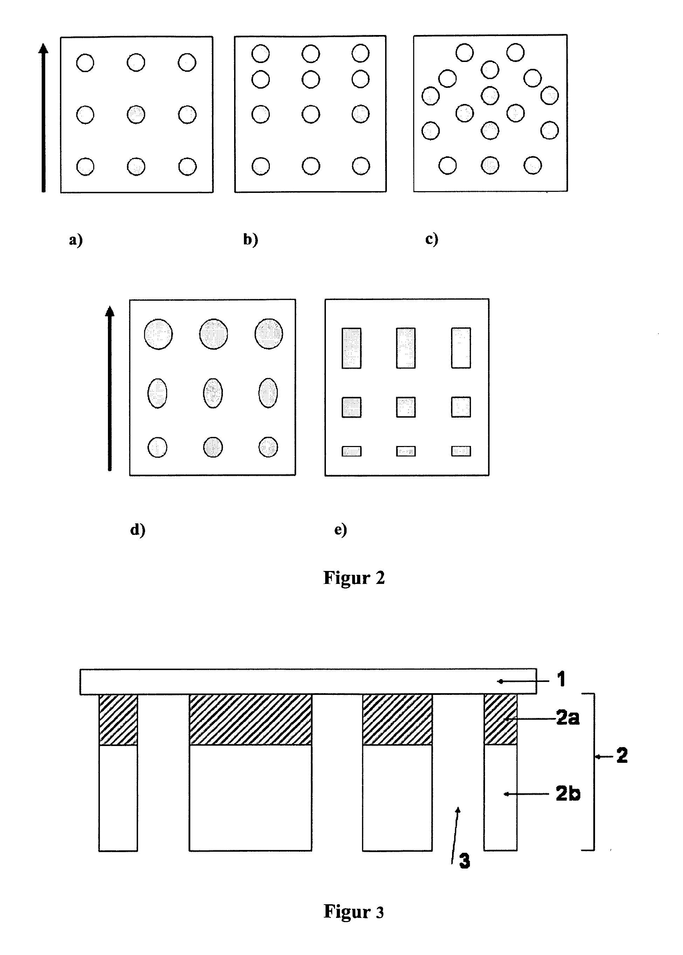

Die Figur 2 zeigt verschiedene Ausgestaltungen a) bis e) der Anordnung der makroskopischen Öffnungen der erfindungsgemäßen Elektrode in der Aufsicht. Der Pfeil gibt die Strömungsrichtung des Betriebsmittels im eingebauten Zustand in der Brennstoffzelle an. Die Ausgestaltung a) zeigt eine Gleichverteilung der auch gleich großen Öffnungen über die Elektrodenfläche, während bei den Beispielen b) bis e) eine Anpassung an die Strömungsdynamik vorgenommen wurde. Bei b) und c) wird die Zunahme der Durchtrittsfläche und eine steigende Anzahl an (identischen) Öffnungen erreicht, während bei d) und e) alternativ oder zusätzlich die Querschnittsflächen der einzelnen Öffnungen zunehmen.

Ein zur Brennstoffzelle strömendes Betriebsmittel gelangt zuerst zu dem Bereich mit den kleinen und/oder wenigen Öffnungen und zuletzt zu dem Bereich mit den großen und/oder vielen Öffnungen. Durch Vorsehen der unterschiedlich großen Durchtrittsflächen wird der Strömungsdynamik über der Elektrodenoberfläche Rechnung getragen.

Die Figur 3 zeigt den schematischen Aufbau der erfindungsgemäßen Elektrode (2), die an einen Elektrolyten (1) angrenzt. Die Gasdiffusionselektrode weist dabei neben dem porösen Bereich 2b) auch die poröse und katalytisch aktive Dreiphasenzöne 2a) auf. Die erfindungsgemäßen durchgehenden, makroskopischen Öffnungen (3) der Elektrode, die nahezu senkrecht zur Elektrodenoberfläche verlaufen, reichen dann innerhalb einer Membran-Elektrodeneinheit regelmäßig bis an die Elektrolytoberfläche.

## Patentansprüche

1. Gasdiffusionselektrode für den Einsatz in einer Brennstoffzelle,
**dadurch gekennzeichnet,**
**dass** die Elektrode wenigstens eine makroskopisch durchgehende Öffnung von wenigstens 0,5 mm² Querschnittsfläche aufweist, die geeignet ist, ein Betriebsmittel durch die Elektrode bis an einen daran angrenzenden Elektrolyten zu- und/oder abzuführen.

2. Gasdiffusionselektrode nach Anspruch 1, mit wenigstens 5, insbesondere wenigstens 10 Öffnungen.

3. Gasdiffusionselektrode nach Anspruch 1 oder 2, bei der die makroskopisch durchgehenden Öffnungen überwiegend senkrecht zur Elektrodenoberfläche angeordnet sind.

4. Gasdiffusionselektrode nach Anspruch 1 bis 3, bei der die Öffnungen über die Elektrodenoberfläche gleich verteilt vorliegen.

5. Gasdiffusionselektrode nach Anspruch 1 bis 3, bei der die Öffnungen über die Elektrodenoberfläche inhomogen verteilt vorliegen.

6. Gasdiffusionselektrode nach Anspruch 1 bis 3, bei der die Querschnittsflächen aller Öffnungen identisch sind.

7. Gasdiffusionselektrode nach Anspruch 1 bis 3, bei der die Querschnittsflächen der Öffnungen unterschiedlich sind.

8. Gasdiffusionselektrode nach einem der Ansprüche 1 bis 7, bei der die Durchtrittsfläche, von einer Seite zur anderen, um wenigstens 10 %, vorzugsweise um wenigstens 20 %, zunimmt.

9. Gasdiffusionselektrode nach einem der Ansprüche 1 bis 8, bei der die Öffnungen Querschnitte im Bereich von 0,5 mm² bis kleiner 0,6 cm², insbesondere bis kleiner 4 mm² aufweisen.

10. Verwendung einer Gasdiffusionselektrode nach einem der Ansprüche 1 bis 9 in einer Niedertemperatur-Brennstoffzelle.

11. Verwendung nach Anspruch 10 in einer Direkt-Methanol-Brennstoffzelle.

12. Verfahren zur Herstellung einer Gasdiffusionselektrode nach einem der Ansprüche 1 bis 9, bei der nach der Herstellung einer Elektrode gemäß dem Stand der Technik einzelne, makroskopische, durchgehende Öffnungen senkrecht zur Elektrodenoberfläche ausgestanzt werden.

13. Verfahren nach Anspruch 12, bei dem einzelne Öffnungen mit einem Querschnitt von 0,5 mm² bis 0,6 cm², insbesondere bis 4 mm² ausgestanzt werden.
